# EUROPEAN PATENT APPLICATION

(11) **EP 4 770 077 A1**
(43) Date of publication of application: **01.07.2026**
(21) Application number: 25221043.0
(22) Date of filing: 05.12.2025
(51) Int. Cl.: H04N 7/18

(54) **METHODS FOR MAPPING CAMERA LOCATION AND CAMERA FIELD OF VIEW FOR EACH OF A PLURALITY OF VIDEO CAMERAS**

(30) Priority: 30.12.2024 US 202419004967
(71) Applicant: Honeywell International Inc., Charlotte, NC 28202 (US)
(72) Inventor: BHATTACHARJEE, Arnab, Charlotte, 28202 (US); ESWARA, Lalitha M, Charlotte, 28202 (US); KOLI, Bhupesh Kumar, Charlotte, 28202 (US)
(74) Representative: Haseltine Lake Kempner LLP

(57) **Abstract**

Methods for mapping camera locations and fields of view (FOV) for video surveillance cameras in a facility. A mounted location and FOV are identified for each camera, where the FOV is defined by the mounted location, horizontal direction, vertical tilt, and optical specifications. A camera graph may be generated representing the cameras, with nodes identifying distances and directions between neighboring cameras. The graph is distributed to the cameras, enabling autonomous identification of neighbors. When an object of interest moves toward a neighboring camera's FOV, a peer-to-peer command is sent to track the object. Camera locations can be identified using mobile devices through manual map selection or WiFi/Bluetooth beacons. Camera directions can be determined using mobile device alignment with camera lenses or using camera IMU outputs for image stabilization.

## Description

### TECHNICAL FIELD

The present disclosure relates generally to video surveillance systems, and more particularly to mapping camera location and field of view for each of a plurality of video cameras of a video surveillance system.

### BACKGROUND

Video Surveillance is one of the primary security systems deployed in various establishments like airports, casinos, industries, offshore facilities, harbors, and cities. The number of CCTVs in commercial establishments like airports, casinos etc. range from few tens to hundreds and even thousands. In Industrial surveillance, these cameras can be placed in large open areas spanning few kilometers. What would be desirable are methods for mapping a camera location and a camera FOV (Field of View) for each of the plurality of video cameras in a video surveillance system.

### SUMMARY

The present disclosure relates generally to video surveillance systems, and more particularly to mapping camera location and field of view for each of a plurality of video cameras in a video surveillance system. An example may be found in a method for mapping camera location and camera field of view (FOV) for each of a plurality of video cameras of a video surveillance system of a facility. The illustrative method includes, for each of the plurality of video cameras, identifying the respective video camera from the plurality of video cameras, identifying a mounted location of the respective video camera in the facility, and identifying a FOV of the respective video camera in the facility. The FOV is defined at least in part by the mounted location, a horizontal camera direction relative to the mounted location, a vertical camera tilt direction relative to the mounted location, and one or more optical specifications of the respective video camera. A camera graph representative of the plurality of video cameras is automatically generated based on the mounted location and the identified FOV of each of the plurality of video cameras, wherein the camera graph includes a plurality of camera graph nodes that each represent a respective one of the plurality of video cameras, wherein each camera graph node identifies a distance and a direction from the video camera represented by the camera graph node to a neighboring video camera represented by each of one or more neighboring camera graph nodes, and each camera graph nodes also identifies the FOV including the horizontal camera direction and the vertical camera tilt direction relative to the mounted location of the video camera represented by the respective camera graph node. The camera graph is distributed to each of the plurality of video cameras. Each of the plurality video cameras autonomously identify neighboring video cameras based on the camera graph and identify an object of interest within the FOV of the respective video camera, and determine when the object of interest is moving toward the FOV of a neighboring video camera as defined by the camera graph, and in response, sending a unicast peer-to-peer command to the neighboring video camera to track the object of interest when the object of interest arrives in the FOV of the neighboring video camera.

Another example may be found in a method for mapping camera location and camera field of view (FOV) for each of a plurality of video cameras of a video surveillance system of a facility. This illustrative method includes, for each of the plurality of video cameras, identifying the respective video camera from the plurality of video cameras, identifying a mounted location of the respective video camera in the facility, and identifying a FOV of the respective video camera in the facility, wherein the FOV is defined at least in part by the mounted location, a horizontal camera direction relative to the mounted location, a vertical camera tilt direction relative to the mounted location, and one or more optical specifications of the respective video camera. The horizontal camera direction and the vertical camera tilt direction of the respective video camera is identified for each of the plurality of video cameras by aiming a camera of a mobile device at a lens of the respective video camera, displaying a FOV of the camera of the mobile device (i.e. display the image captured by the camera of the mobile device) on a display of the mobile device, displaying an alignment marking on the display of the mobile device that is aligned with the center of the FOV of the camera of the mobile device, aligning the alignment marking displayed on the display of the mobile device with an alignment marking on the lens of the respective video camera, and once aligned, obtaining an orientation of the mobile device using one or more orientation sensors of the mobile device, and determining the horizontal camera direction and the vertical camera tilt direction of the respective video camera based on the orientation of the mobile device. The method may include tracking one or more objects of interest in the facility across two or more of the plurality of video cameras using the identified mounted location and the FOV of the plurality of video cameras.

Another example may be found in a method for mapping camera location and camera field of view (FOV) for each of a plurality of video cameras of a video surveillance system of a facility. This method includes, for each of the plurality of video cameras, identifying the respective video camera from the plurality of video cameras, identifying a mounted location of the respective video camera in the facility, identifying a FOV of the respective video camera in the facility, wherein the FOV is defined at least in part by the mounted location, a horizontal camera direction relative to the mounted location, a vertical camera tilt direction relative to the mounted location, and one or more optical specifications of the respective video camera, and identifying one or more of the horizontal camera direction and the vertical camera tilt direction of the respective video camera based at least in part an output of an Inertial Measurement Unit (IMU) of the respective video camera that is also used for image stabilization. One or more objects of interest in the facility may be tracked across two or more of the plurality of video cameras using the identified mounted location and the FOV of the plurality of video cameras.

The preceding summary is provided to facilitate an understanding of some of the innovative features unique to the present disclosure and is not intended to be a full description. A full appreciation of the disclosure can be gained by taking the entire specification, claims, figures, and abstract as a whole.

### BRIEF DESCRIPTION OF THE FIGURES

The disclosure may be more completely understood in consideration of the following description of various examples in connection with the accompanying drawings, in which:
Figure 1 is a schematic block diagram showing an illustrative video surveillance system;
Figure 2 is a schematic view of an illustrative camera graph;
Figures 3A, 3B, 3C and 3D are flow diagrams that together show an illustrative method for mapping camera location and camera field of view (FOV) for each of a plurality of video cameras;
Figures 4A, 4B and 4C are flow diagrams that together show an illustrative method for mapping camera location and camera field of view (FOV) for each of a plurality of video cameras;
Figures 5A, 5B and 5C are flow diagrams that together show an illustrative method for mapping camera location and camera field of view (FOV) for each of a plurality of video cameras;
Figure 6 is a flow diagram that shows an overall method for setting up a new video camera;
Figure 7 is a flow diagram that shows a method for detecting camera location;
Figure 8 is a flow diagram that shows a method for detecting camera direction; and
Figure 9 is a flow diagram that shows a method for detecting camera direction.

While the disclosure is amenable to various modifications and alternative forms, specifics thereof have been shown by way of example in the drawings and will be described in detail. It should be understood, however, that the intention is not to limit the disclosure to the particular examples described. On the contrary, the intention is to cover all modifications, equivalents, and alternatives falling within the spirit and scope of the disclosure.

### DESCRIPTION

The following description should be read with reference to the drawings, in which like elements in different drawings are numbered in like fashion. The drawings, which are not necessarily to scale, depict examples that are not intended to limit the scope of the disclosure. Although examples are illustrated for the various elements, those skilled in the art will recognize that many of the examples provided have suitable alternatives that may be utilized.

All numbers are herein assumed to be modified by the term "about", unless the content clearly dictates otherwise. The recitation of numerical ranges by endpoints includes all numbers subsumed within that range (e.g., 1 to 5 includes 1, 1.5, 2, 2.75, 3, 3.80, 4, and 5).

As used in this specification and the appended claims, the singular forms "a", "an", and "the" include the plural referents unless the content clearly dictates otherwise. As used in this specification and the appended claims, the term "or" is generally employed in its sense including "and/or" unless the content clearly dictates otherwise.

It is noted that references in the specification to "an embodiment", "some embodiments", "other embodiments", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is contemplated that the feature, structure, or characteristic may be applied to other embodiments whether or not explicitly described unless clearly stated to the contrary.

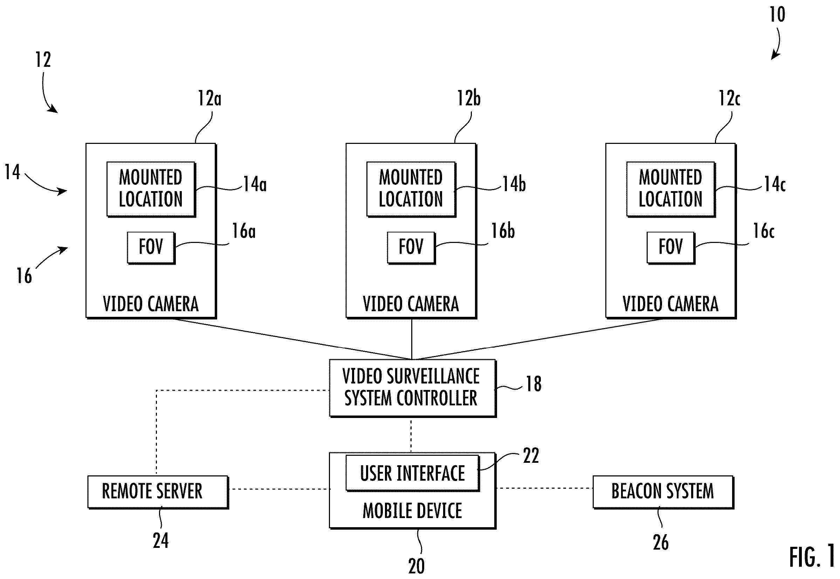

Figure 1 is a schematic block diagram showing an illustrative video surveillance system 10. The illustrative video surveillance system 10 includes a number of video cameras 12, individually labeled as 12a, 12b, and 12c. While three video cameras 12 are shown, in some cases the video surveillance system 10 may include any number of video cameras, and may include considerably more than three video cameras 12. Each of the video cameras 12 may be considered as having a mounted location 14, individually labeled as 14a, 14b, and 14c, that indicates where the particular video camera 12 is mounted within the facility. The mounted location 14 may include floor plan information such as X, Y coordinates if the particular video camera 12 is mounted indoors, for example. Each of the video cameras 12 may be considered as having a FOV (Field Of View) 16, individually labeled as 16a, 16b, and 16c. Each of the video cameras 12 may be considered as being operatively coupled via a wired or wireless connection to a video surveillance system controller 18. The video surveillance system controller 18 may be part of a video surveillance system control panel. In some cases, the video surveillance system controller 18 may be configured to communicate with a remote server 24. In some cases, the video surveillance system controller 18 may be configured to communicate with a mobile device 20 having a user interface 22 that allows a user to view and enter information into the mobile device 20. In some cases, the mobile device 20 may be configured to communicate with the remote server 24. In some cases, the mobile device 20 may be configured to communicate with a beacon system 26 that may be WiFi-based or Bluetooth-based, for example. The mobile device 20 may be able to utilize the beacon system 26 in ascertain particular locations within a facility.

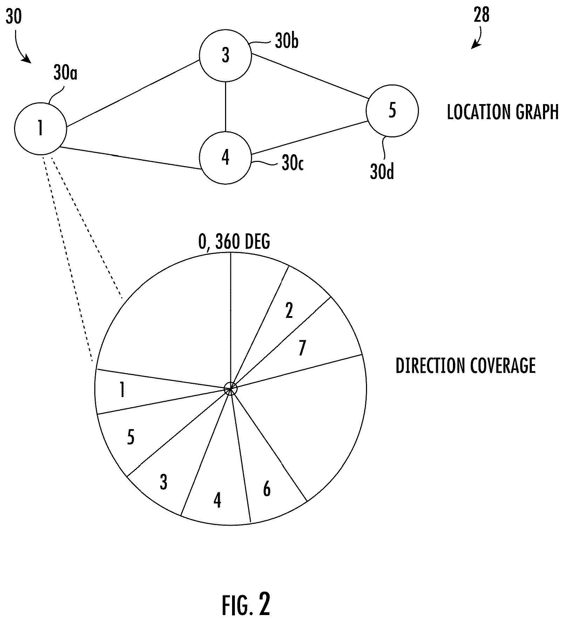

Figure 2 is a schematic drawing showing an illustrative camera graph 28. In some cases, the illustrative camera graph 28 is automatically generated based on the mounted location 14 and the identified FOV 16 of each of the plurality of video cameras 12. The illustrative camera graph 28 includes a plurality of camera graph nodes 30, individually labeled as 30a, 30b, 30c, and 30d that each represent a respective one of the plurality of video cameras 12, wherein each camera graph node 30 identifies a distance and a direction from the video camera 12 represented by the camera graph node 30 to a neighboring video camera 12 represented by each of one or more neighboring camera graph nodes 30, and each camera graph node 30 identifies the FOV including the horizontal camera direction and the vertical camera tilt direction relative to the mounted location 14 of the video camera 12 represented by the respective camera graph node 30. Once generated, the camera graph 28 may be distributed to each of the plurality of video cameras 12. Each of the plurality video cameras 12 may then autonomously identify neighboring video cameras 12 based on the camera graph 28 and identify an object of interest within the FOV 16 of the respective video camera 12, and determine when the object of interest is moving toward the FOV 16 of a neighboring video camera 12 as defined by the camera graph 28, and in response, send a unicast peer-to-peer command to the neighboring video camera 12 to track the object of interest when the object of interest arrives in the FOV 16 of the neighboring video camera 12. Characteristics of the object of interest to track may be communicated to the neighboring video camera 12. The characteristics of the object of interest may be represented in metadata that is generated, for example, by one or more video analytics algorithms.

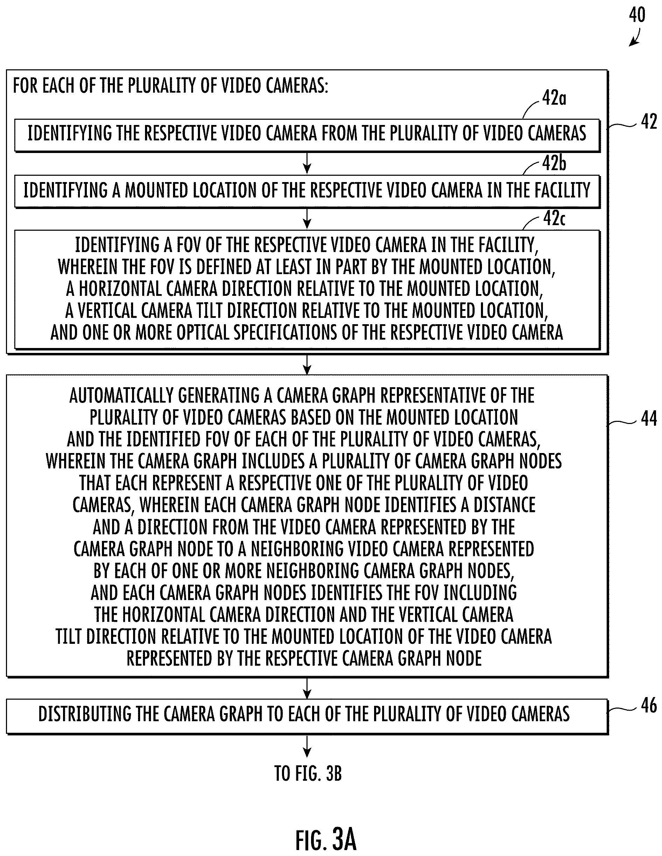

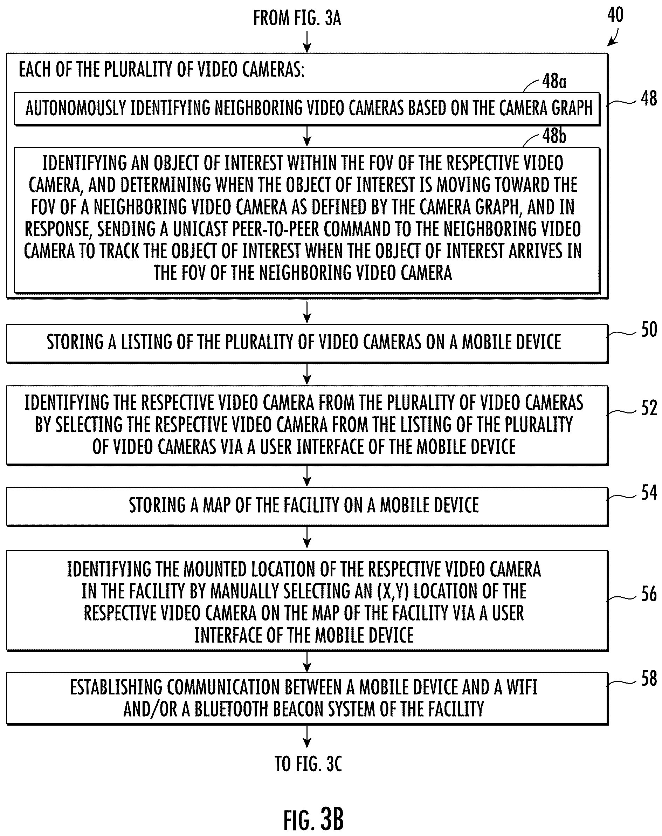

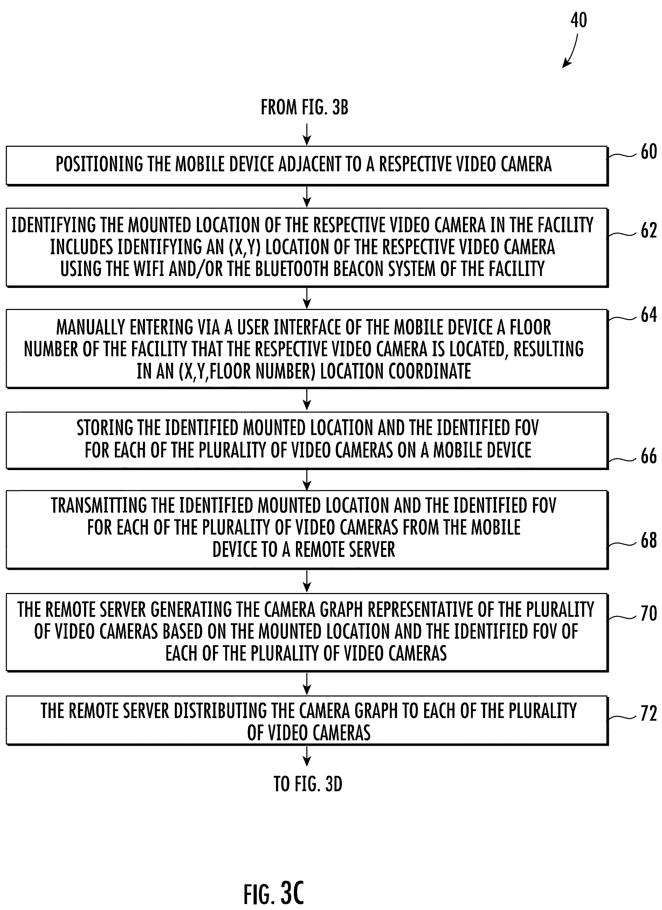

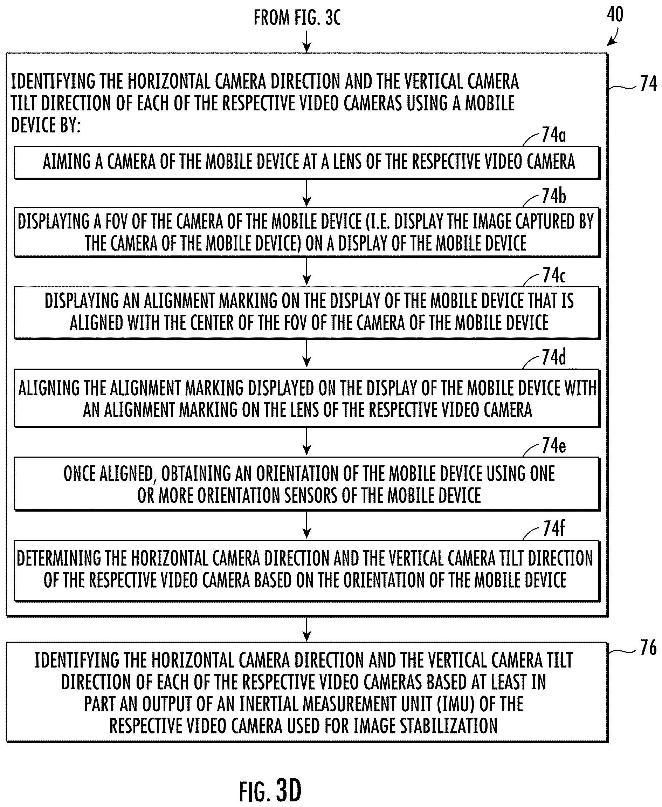

Figures 3A, 3B, 3C, and 3D are flow diagrams that together show an illustrative method 40 for mapping camera location (such as the camera location 14) and camera field of view (FOV) (such as the FOV 16) for each of a plurality of video cameras (such as the video cameras 12) of a video surveillance system (such as the video surveillance system 10) of a facility, the method 40 including taking several steps for each of the plurality of video cameras, as indicated at block 42. The several steps include first identifying the respective video camera from the plurality of video cameras, as indicated at block 42a. The several steps include identifying a mounted location of the respective video camera in the facility, as indicated at block 42b. The several steps include identifying a FOV of the respective video camera in the facility, wherein the FOV is defined at least in part by the mounted location, a horizontal camera direction relative to the mounted location, a vertical camera tilt direction relative to the mounted location, and one or more optical specifications of the respective video camera, as indicated at block 42c. A camera graph is then automatically generated that is representative of the plurality of video cameras based on the mounted location and the identified FOV of each of the plurality of video cameras, wherein the camera graph includes a plurality of camera graph nodes that each represent a respective one of the plurality of video cameras, wherein each camera graph node identifies a distance and a direction from the video camera represented by the camera graph node to a neighboring video camera represented by each of one or more neighboring camera graph nodes, and each camera graph nodes identifies the FOV including the horizontal camera direction and the vertical camera tilt direction relative to the mounted location of the video camera represented by the respective camera graph node, as indicated at block 44. Once generated, the camera graph is distributed to each of the plurality of video cameras, as indicated at block 46.

Continuing on Figure 3B, the method 40 includes each of the plurality of video cameras taking several steps, as indicated at block 48. The several steps include autonomously identifying neighboring video cameras based on the camera graph, as indicated at block 48a. The several steps include identifying an object of interest within the FOV of the respective video camera, and determining when the object of interest is moving toward the FOV of a neighboring video camera as defined by the camera graph, and in response, sending a unicast peer-to-peer command to the neighboring video camera to track the object of interest when the object of interest arrives in the FOV of the neighboring video camera, as indicated at block 48b.

In some cases, the method 40 includes storing a listing of the plurality of video cameras on a mobile device (such as the mobile device 20), as indicated at block 50. The respective video camera may be identified from the plurality of video cameras by selecting the respective video camera from the listing of the plurality of video cameras via a user interface of the mobile device, as indicated at block 52.

In some cases, the method 40 includes storing a map of the facility on the mobile device, as indicated at block 54. The mounted location of the respective video camera in the facility may be identified by manually selecting (e.g. touching or clicking) an (x,y) location of the respective video camera on the map of the facility via a user interface of the mobile device, as indicated at block 56.

In some cases, the method 40 may include establishing communication between the mobile device and a WiFi and/or a Bluetooth beacon system (such as the beacon system 26) of the facility, as indicated at block 58. Continuing on Figure 3C, the mobile device may be positioned adjacent to a respective video camera, as indicated at block 60. In some cases, identifying the mounted location of the respective video camera in the facility may include identifying an (x,y) location of the mobile device using the WiFi and/or the Bluetooth beacon system of the facility, as indicated at block 62. In some cases, a floor number of the facility that the respective video camera is located may be manually entered via a user interface (such as the user interface 22) of the mobile device, resulting in an (x,y,floor number) tuple location coordinate for the respective video camera, as indicated at block 64.

In some cases, the method 40 may include storing the identified mounted location and the identified FOV for each of the plurality of video cameras on the mobile device, as indicated at block 66. The identified mounted location and the identified FOV for each of the plurality of video cameras may be transmitted from the mobile device to a remote server (such as the remote server 24), as indicated at block 68. The remote server may generate the camera graph representative of the plurality of video cameras based on the mounted location and the identified FOV of each of the plurality of video cameras, as indicated at block 70. The remote server may distribute the camera graph to each of the plurality of video cameras, as indicated at block 72.

Continuing on Figure 3D, the method 40 may include identifying the horizontal camera direction and the vertical camera tilt direction of each of the respective video cameras using a mobile device via several steps, as indicated at block 74. The several steps may include, for example, aiming a camera of the mobile device at a lens of the respective video camera, as indicated at block 74a. The several steps may include displaying a FOV of the camera of the mobile device (i.e. display the image captured by the camera of the mobile device) on a display of the mobile device, as indicated at block 74b. The several steps may include displaying an alignment marking on the display of the mobile device that is aligned with the center of the FOV of the camera of the mobile device, as indicated at block 74c. The several steps may include move the mobile device to align the alignment marking displayed on the display of the mobile device with an alignment marking on the lens of the respective video camera, as indicated at block 74d. Once aligned, the several steps may include obtaining an orientation of the mobile device using one or more orientation sensors (e.g. magnetometers, accelerometers, gyroscopes) of the mobile device, as indicated at block 74e. The several steps may include determining the horizontal camera direction and the vertical camera tilt direction of the respective video camera based on the orientation of the mobile device when properly aligned with the video camera, as indicated at block 74f. In some cases, the method 40 may include identifying the horizontal camera direction and the vertical camera tilt direction of each of the respective video cameras based at least in part an output of an Inertial Measurement Unit (IMU) of the respective video camera that can be used for image stabilization, as indicated at block 76.

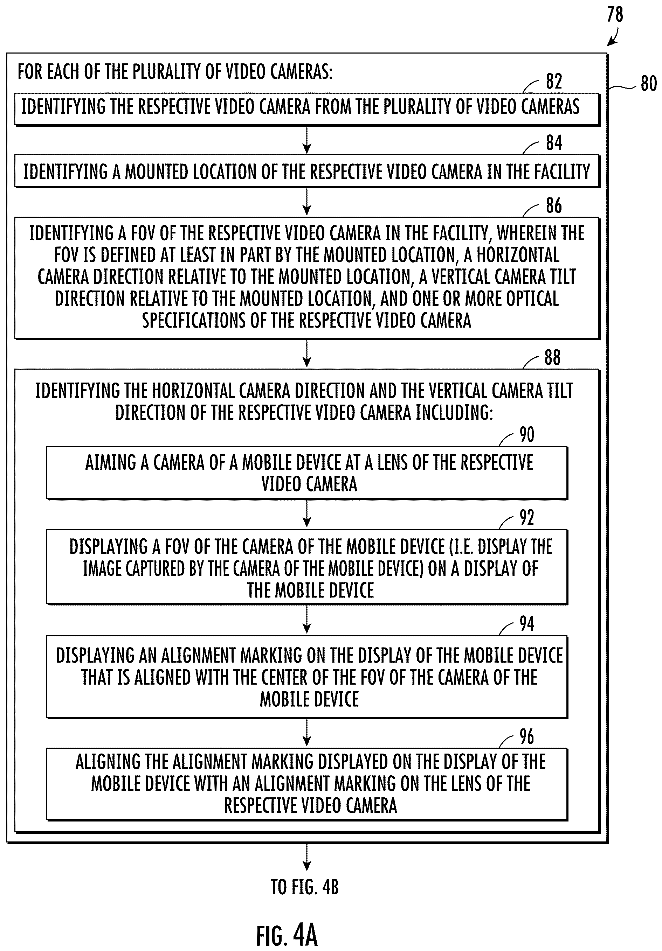

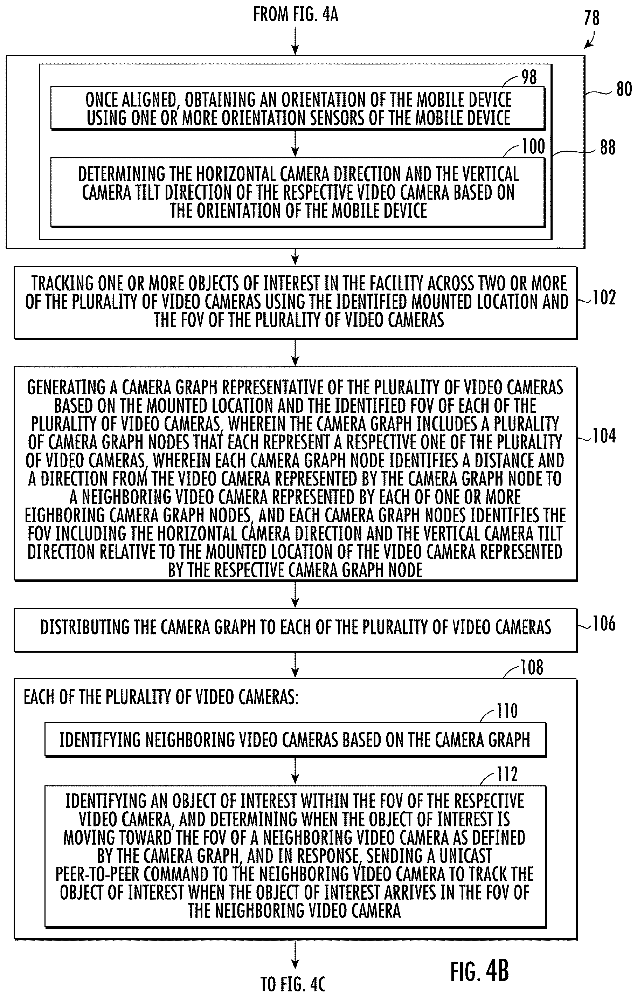

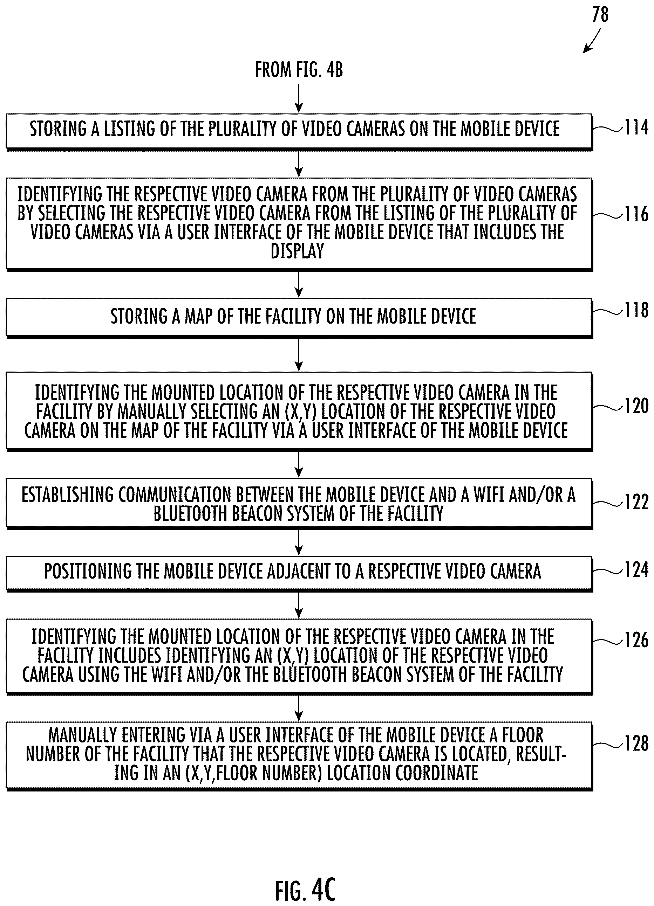

Figures 4A, 4B, and 4C are flow diagrams that together show an illustrative method 78 for mapping camera location (such as the camera location 14) and camera field of view (FOV) (such as the FOV 16) for each of a plurality of video cameras (such as the video cameras 12) of a video surveillance system (such as the video surveillance system 10) of a facility. The method 78 including taking several steps for each of the plurality of video cameras, as indicated at block 80. The several steps include identifying the respective video camera from the plurality of video cameras, as indicated at block 82. The several steps include identifying a mounted location of the respective video camera in the facility, as indicated at block 84. The several steps include identifying a FOV of the respective video camera in the facility, wherein the FOV is defined at least in part by the mounted location, a horizontal camera direction relative to the mounted location, a vertical camera tilt direction relative to the mounted location, and one or more optical specifications of the respective video camera, as indicated at block 86. The several steps include identifying the horizontal camera direction and the vertical camera tilt direction of the respective video camera via additional steps, as indicated at block 88. Additional steps may include aiming a camera of a mobile device at a lens of the respective video camera, as indicated at block 90, displaying a FOV of the camera of the mobile device (i.e. display the image captured by the camera of the mobile device) on a display of the mobile device, as indicated at block 92, displaying an alignment marking on the display of the mobile device that is aligned with the center of the FOV of the camera of the mobile device, as indicated at block 94, aligning the alignment marking displayed on the display of the mobile device with an alignment marking on the lens of the respective video camera, as indicated at block 96.

Continuing on Figure 4B, the additional steps may include, once aligned, obtaining an orientation of the mobile device using one or more orientation sensors (e.g. magnetometers, accelerometers, gyroscopes) of the mobile device, as indicated at block 98. The additional steps may include determining the horizontal camera direction and the vertical camera tilt direction of the respective video camera based on the orientation of the mobile device, as indicated at block 100.

The method 78 may include tracking one or more objects of interest in the facility across two or more of the plurality of video cameras using the identified mounted location and the FOV of the plurality of video cameras, as indicated at block 102. In some cases, the method 78 may further include generating a camera graph representative of the plurality of video cameras based on the mounted location and the identified FOV of each of the plurality of video cameras, wherein the camera graph includes a plurality of camera graph nodes that each represent a respective one of the plurality of video cameras, wherein each camera graph node identifies a distance and a direction from the video camera represented by the camera graph node to a neighboring video camera represented by each of one or more neighboring camera graph nodes, and each camera graph nodes identifies the FOV including the horizontal camera direction and the vertical camera tilt direction relative to the mounted location of the video camera represented by the respective camera graph node, as indicated at block 104. The camera graph may be distributed to each of the plurality of video cameras, as indicated at block 106.

Each of the plurality of video cameras may carry out several steps, as indicated at block 108. One of the steps may include identifying neighboring video cameras based on the camera graph, as indicated at block 110. One of the steps may include identifying an object of interest within the FOV of the respective video camera, and determining when the object of interest is moving toward the FOV of a neighboring video camera as defined by the camera graph, and in response, sending a unicast peer-to-peer command to the neighboring video camera to track the object of interest when the object of interest arrives in the FOV of the neighboring video camera, as indicated at block 112. Characteristics of the object of interest to track may be communicated to the neighboring video camera 12. The characteristics of the object of interest may be represented in metadata that is generated, for example, by one or more video analytics algorithms.

Continuing on Figure 4C, the method 78 may include storing a listing of the plurality of video cameras on the mobile device, as indicated at block 114. The respective video camera may be identified from the plurality of video cameras by selecting the respective video camera from the listing of the plurality of video cameras via a user interface of the mobile device that includes the display, as indicated at block 116.

In some cases, the method 78 may further include storing a map of the facility on the mobile device, as indicated at block 118. The mounted location of the respective video camera in the facility may be identified by manually selecting an (x,y) location of the respective video camera on the map of the facility via a user interface of the mobile device, as indicated at block 120.

In some cases, the method 78 may further include establishing communication between the mobile device and a WiFi and/or a Bluetooth beacon system of the facility, as indicated at block 122. The mobile device may be positioned adjacent to a respective video camera, as indicated at block 124. The mounted location of the respective video camera in the facility may be identified by identifying an (x,y) location of the mobile device using the WiFi and/or the Bluetooth beacon system of the facility, as indicated at block 126. In some cases, the method 78 may further include manually entering via a user interface of the mobile device a floor number of the facility that the respective video camera is located, resulting in an (x,y,floor number) tuple location coordinate, as indicated at block 128.

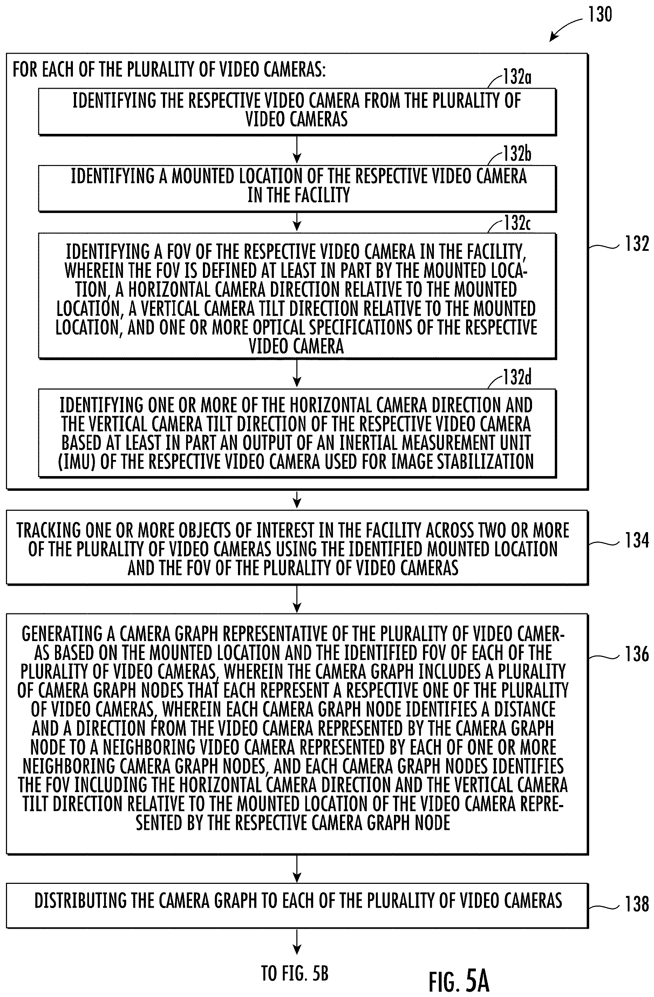

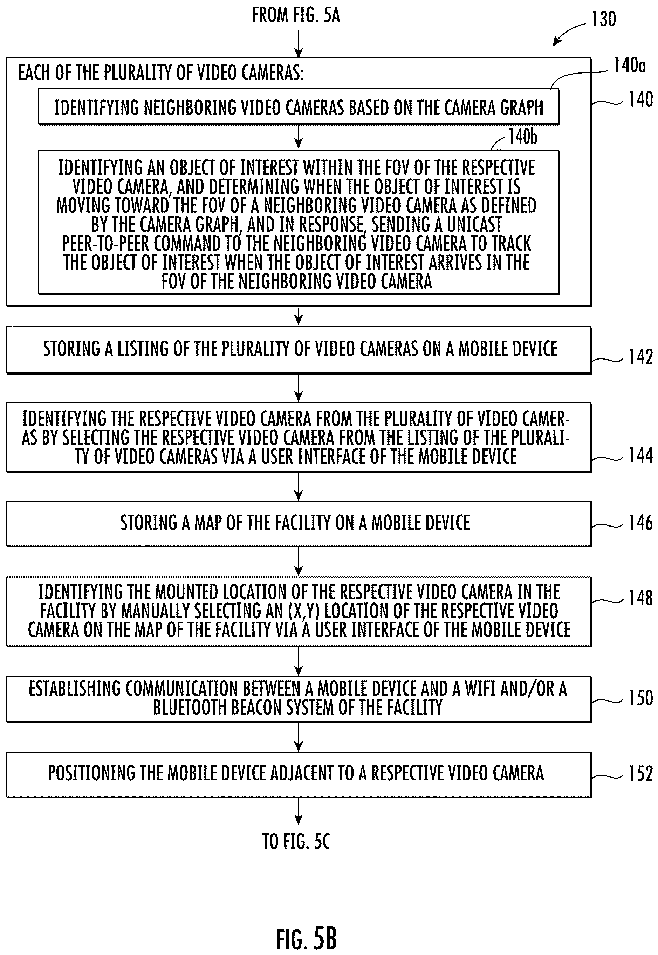

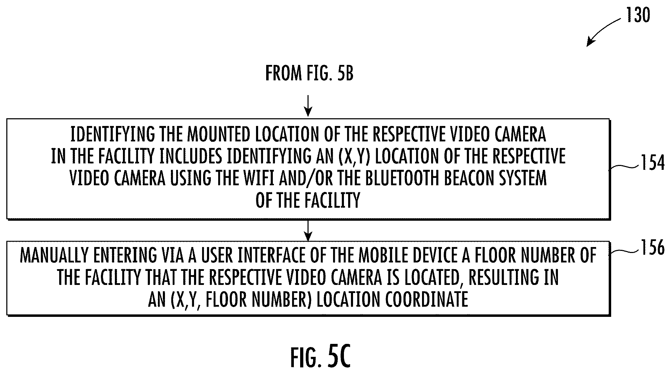

Figures 5A, 5B, and 5C are flow diagrams that together show an illustrative method 130 for mapping camera location (such as the camera location 14) and camera field of view (FOV) (such as the FOV 16) for each of a plurality of video cameras (such as the video cameras 12) of a video surveillance system (such as the video surveillance system 10) of a facility, the method 130 including taking several steps for each of the plurality of video cameras, as indicated at block 132. In this example, the several steps include identifying the respective video camera from the plurality of video cameras, as indicated at block 132a. The several steps include identifying a mounted location of the respective video camera in the facility, as indicated at block 132b. The several steps include identifying a FOV of the respective video camera in the facility, wherein the FOV is defined at least in part by the mounted location, a horizontal camera direction relative to the mounted location, a vertical camera tilt direction relative to the mounted location, and one or more optical specifications of the respective video camera, as indicated at block 132c. The several steps include identifying one or more of the horizontal camera direction and the vertical camera tilt direction of the respective video camera based at least in part an output of an Inertial Measurement Unit (IMU) of the respective video camera used for image stabilization, as indicated at block 132d. The method 130 may further include tracking one or more objects of interest in the facility across two or more of the plurality of video cameras using the identified mounted location and the FOV of the plurality of video cameras, as indicated at block 134.

In some cases, the method 130 includes generating a camera graph representative of the plurality of video cameras based on the mounted location and the identified FOV of each of the plurality of video cameras, wherein the camera graph includes a plurality of camera graph nodes that each represent a respective one of the plurality of video cameras, wherein each camera graph node identifies a distance and a direction from the video camera represented by the camera graph node to a neighboring video camera represented by each of one or more neighboring camera graph nodes, and each camera graph nodes identifies the FOV including the horizontal camera direction and the vertical camera tilt direction relative to the mounted location of the video camera represented by the respective camera graph node, as indicated at block 136. The method 130 may include distributing the camera graph to each of the plurality of video cameras, as indicated at block 138.

Continuing on Figure 5B, the method 130 includes each of the plurality of video cameras taking several steps, as indicated at block 140. In this example, the several steps include identifying neighboring video cameras based on the camera graph, as indicated at block 140a. The several steps include identifying an object of interest within the FOV of the respective video camera, and determining when the object of interest is moving toward the FOV of a neighboring video camera as defined by the camera graph, and in response, sending a unicast peer-to-peer command to the neighboring video camera to track the object of interest when the object of interest arrives in the FOV of the neighboring video camera, as indicated at block 140b.

In some cases, the method 130 may include storing a listing of the plurality of video cameras on a mobile device, as indicated at block 142. The respective video camera may be identified from the plurality of video cameras by selecting the respective video camera from the listing of the plurality of video cameras via a user interface of the mobile device, as indicated at block 144.

In some cases, the method 130 may include storing a map of the facility on a mobile device, as indicated at block 146. The mounted location of the respective video camera in the facility may be identified by manually selecting an (x,y) location of the respective video camera on the map of the facility via a user interface of the mobile device, as indicated at block 148.

In some cases, the method 130 may include establishing communication between a mobile device and a WiFi and/or a Bluetooth beacon system of the facility, as indicated at block 150. The mobile device may be positioned adjacent to a respective video camera, as indicated at block 152. Continuing on Figure 5C, identifying the mounted location of the respective video camera in the facility may include identifying an (x,y) location of the mobile device using the WiFi and/or the Bluetooth beacon system of the facility, as indicated at block 154. In some cases, a floor number of the facility that the respective video camera is located may be manually entered via a user interface of the mobile device, resulting in a (x,y,floor number) tuple location coordinate, as indicated at block 156.

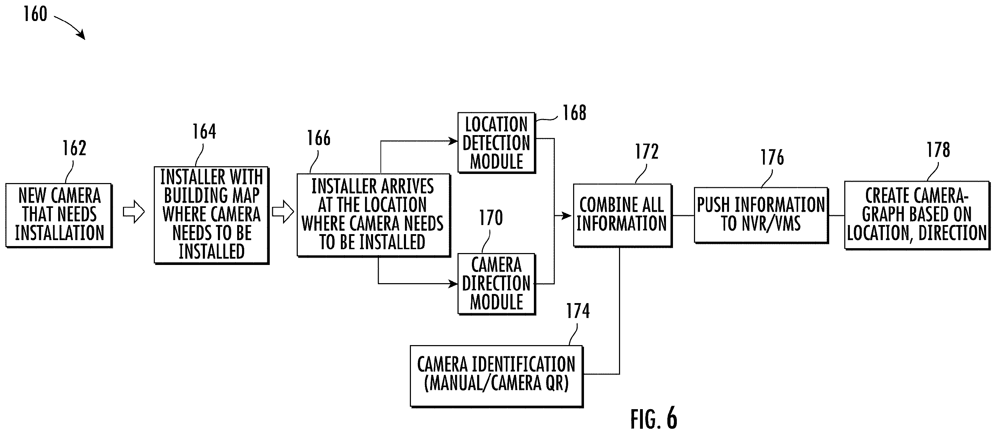

Figure 6 is a flow diagram that shows an overall method 160 for setting up a new video camera. The illustrative method 160 begins at block 162, with a new camera that needs to be installed. An installer has a building map indicating an installation location, as indicated at block 164. The installer arrives at the installation location, as indicated at block 166. A location detection module 168 and a camera direction module 170 provide information to a summation point, as indicated at block 172. In some cases, this includes camera identification, as indicated at block 174. The information is pushed to the system, such as an NVR (Network Video Recorder) or VMS (Video Management System), as indicated at block 176. The information is then used to create a camera graph, as indicated at block 178.

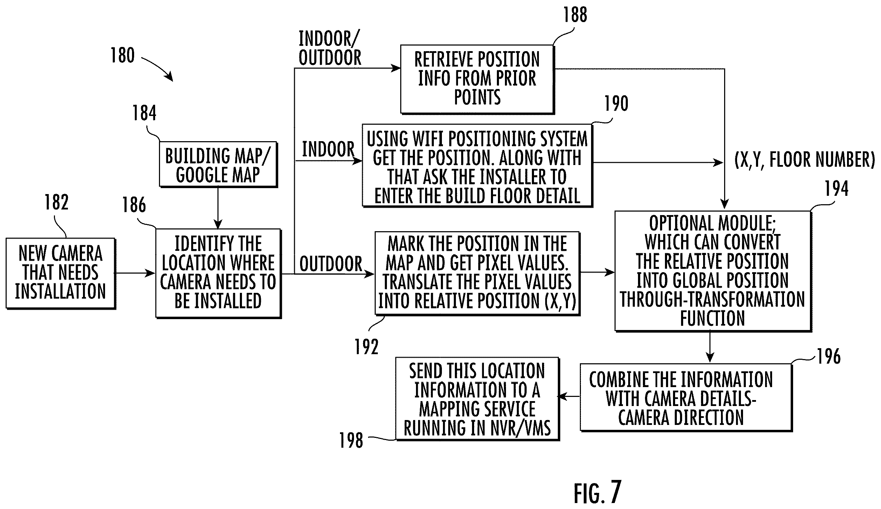

Figure 7 is a flow diagram that shows a method 180 for detecting camera location. The method 180 may be carried out by the location detection module 168 of Figure 6, for example. The method 180 begins at block 182, with a new camera that needs to be installed. A building map or Google map is provided, as indicated at block 184. The desired camera installation location is determined based on the information from blocks 182 and 184, as indicated at block 186. The installer than installs the new camera at or near the desired camera installation location. In some cases, for indoor/outdoor installations, actual position information for the new camera may be retrieved from prior points, as indicated at block 188. In some cases, for indoor installation, actual position information for the new camera may be obtained by positioning the installers mobile device near the new camera and obtaining a location of the mobile device of the installer using WiFi positioning, as indicated at block 190. In some case, for outdoor installation, position information may be marked on a map, as indicated at block 192. The position information may optionally be provided to a module that can convert relative position into a global position, as indicated at block 194. This information is combined with camera details and camera direction information, as indicated at block 196. This information is provided to a mapping service running in an NVR or VMS, as indicated at block 198.

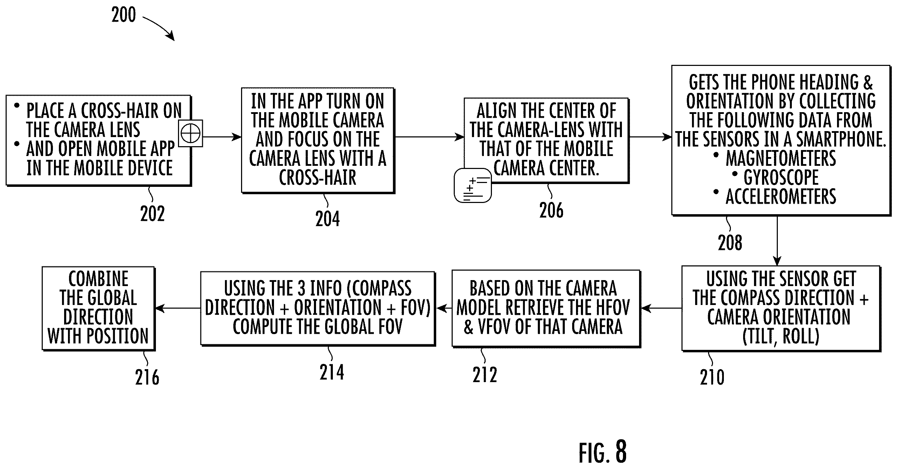

Figure 8 is a flow diagram that shows a method 200 for automatically detecting camera direction. The method 200 begins with placing a cross-hair on the camera lens and opening an app in the mobile device, as indicated at block 202. The cross-hair may be printed onto a clear sticker that is placed on the camera lens, for example. In some cases, the cross-hair may be placed on the camera lens before the camera is shipped, and may be removed after the camera direction is established. The mobile camera is activated focused on the cross-hair on the camera lens, as indicated at block 204. In some cases, the mobile device may display a cross-hair on the mobile device display, and the cross-hair on the mobile device display are aligned with the cross-hair on the camera lens by changing the orientation of the mobile device. In this way, the center of the camera lens may be aligned with that of the mobile device camera, as indicated at block 206. Phone orientation and heading are obtained from sensors (e.g. magnetometers, accelerometers, gyroscopes) within the mobile device, as indicated at block 208. In some cases, the sensors are used to obtain compass direction and camera orientation, as indicated at block 210. The extent of the HFOV (horizontal field of view) and VFOF (vertical field of view) of the camera are obtained from the camera model information, as indicated at block 212. A global FOV is determined, as indicated at block 214. The global direction is combined with the camera's location, as indicated at block 216.

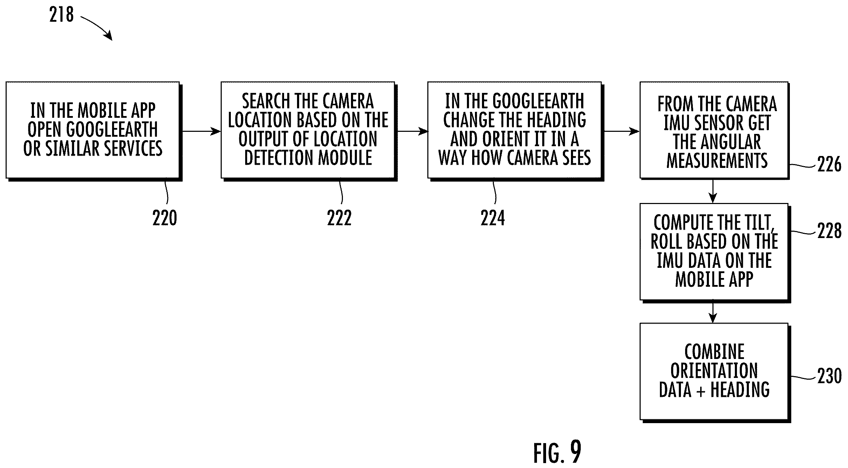

Figure 9 is a flow diagram that shows a method 218 for detecting camera direction. The method 218 begins with opening Google Earth or a similar application on the mobile device, as indicated at block 220. The camera location, as determined by the location detection module 168, is searched, as indicated at block 222. The mobile device is manipulated to change the heading and orientation in Google Earth to match the camera orientation, as indicated at block 224. Angular measurements are obtained, as indicated at block 226. Tilt and roll of the camera are calculated, as indicated at block 228. The orientation data and heading are combined, as indicated at block 230.

Having thus described several illustrative embodiments of the present disclosure, those of skill in the art will readily appreciate that yet other embodiments may be made and used within the scope of the claims hereto attached. It will be understood, however, that this disclosure is, in many respects, only illustrative. Changes may be made in details, particularly in matters of shape, size, arrangement of parts, and exclusion and order of steps, without exceeding the scope of the disclosure. The disclosure's scope is, of course, defined in the language in which the appended claims are expressed.

## Claims

1. A method for mapping camera location and camera field of view (FOV) for each of a plurality of video cameras of a video surveillance system of a facility, the method comprising:
for each of the plurality of video cameras:
identifying the respective video camera from the plurality of video cameras;
identifying a mounted location of the respective video camera in the facility;
identifying a FOV of the respective video camera in the facility, wherein the FOV is defined at least in part by the mounted location, a horizontal camera direction relative to the mounted location, a vertical camera tilt direction relative to the mounted location, and one or more optical specifications of the respective video camera;
automatically generating a camera graph representative of the plurality of video cameras based on the mounted location and the identified FOV of each of the plurality of video cameras, wherein the camera graph includes a plurality of camera graph nodes that each represent a respective one of the plurality of video cameras, wherein each camera graph node identifies a distance and a direction from the video camera represented by the camera graph node to a neighboring video camera represented by each of one or more neighboring camera graph nodes, and each camera graph nodes identifies the FOV including the horizontal camera direction and the vertical camera tilt direction relative to the mounted location of the video camera represented by the respective camera graph node;
distributing the camera graph to each of the plurality of video cameras;
each of the plurality of video cameras:
autonomously identifying neighboring video cameras based on the camera graph; and
identifying an object of interest within the FOV of the respective video camera, and determining when the object of interest is moving toward the FOV of a neighboring video camera as defined by the camera graph, and in response, sending a unicast peer-to-peer command to the neighboring video camera to track the object of interest when the object of interest arrives in the FOV of the neighboring video camera.

2. The method of claim 1, comprising:
storing a listing of the plurality of video cameras on a mobile device; and
identifying the respective video camera from the plurality of video cameras by selecting the respective video camera from the listing of the plurality of video cameras via a user interface of the mobile device.

3. The method of claim 1, comprising:
storing a map of the facility on a mobile device; and
identifying the mounted location of the respective video camera in the facility by manually selecting an (x,y) location of the respective video camera on the map of the facility via a user interface of the mobile device.

4. The method of any of claims 1-3, comprising:
establishing communication between a mobile device and a WiFi and/or a Bluetooth beacon system of the facility;
positioning the mobile device adjacent to a respective video camera; and
identifying the mounted location of the respective video camera in the facility includes identifying an (x,y) location of the mobile device using the WiFi and/or the Bluetooth beacon system of the facility.

5. The method of claim 4, comprising:
manually entering via a user interface of the mobile device a floor number of the facility that the respective video camera is located, resulting in an (x,y,floor number) tuple location coordinate.

6. The method of any of claims 1-5, comprising:
storing the identified mounted location and the identified FOV for each of the plurality of video cameras on a mobile device;
transmitting the identified mounted location and the identified FOV for each of the plurality of video cameras from the mobile device to a remote server;
the remote server generating the camera graph representative of the plurality of video cameras based on the mounted location and the identified FOV of each of the plurality of video cameras; and
the remote server distributing the camera graph to each of the plurality of video cameras.

7. The method of any of claims 1-6, comprising identifying the horizontal camera direction and the vertical camera tilt direction of each of the respective video cameras using a mobile device by:
aiming a camera of the mobile device at a lens of the respective video camera;
displaying a FOV of the camera of the mobile device on a display of the mobile device;
displaying an alignment marking on the display of the mobile device that is aligned with a center of the FOV of the camera of the mobile device;
aligning the alignment marking displayed on the display of the mobile device with an alignment marking on the lens of the respective video camera;
once aligned, obtaining an orientation of the mobile device using one or more orientation sensors of the mobile device; and
determining the horizontal camera direction and the vertical camera tilt direction of the respective video camera based on the orientation of the mobile device.

8. The method of any of claims 1-7, comprising identifying the horizontal camera direction and the vertical camera tilt direction of each of the respective video cameras based at least in part an output of an Inertial Measurement Unit (IMU) of the respective video camera used for image stabilization.

9. A method for mapping camera location and camera field of view (FOV) for each of a plurality of video cameras of a video surveillance system of a facility, the method comprising:
for each of the plurality of video cameras:
identifying the respective video camera from the plurality of video cameras;
identifying a mounted location of the respective video camera in the facility;
identifying a FOV of the respective video camera in the facility, wherein the FOV is defined at least in part by the mounted location, a horizontal camera direction relative to the mounted location, a vertical camera tilt direction relative to the mounted location, and one or more optical specifications of the respective video camera,
identifying the horizontal camera direction and the vertical camera tilt direction of the respective video camera including:
aiming a camera of a mobile device at a lens of the respective video camera;
displaying a FOV of the camera of the mobile device on a display of the mobile device;
displaying an alignment marking on the display of the mobile device that is aligned with a center of the FOV of the camera of the mobile device;
aligning the alignment marking displayed on the display of the mobile device with an alignment marking on the lens of the respective video camera;
once aligned, obtaining an orientation of the mobile device using one or more orientation sensors of the mobile device;
determining the horizontal camera direction and the vertical camera tilt direction of the respective video camera based on the orientation of the mobile device; and
tracking one or more objects of interest in the facility across two or more of the plurality of video cameras using the identified mounted location and the FOV of the plurality of video cameras.

10. The method of claim 9, comprising:
generating a camera graph representative of the plurality of video cameras based on the mounted location and the identified FOV of each of the plurality of video cameras, wherein the camera graph includes a plurality of camera graph nodes that each represent a respective one of the plurality of video cameras, wherein each camera graph node identifies a distance and a direction from the video camera represented by the camera graph node to a neighboring video camera represented by each of one or more neighboring camera graph nodes, and each camera graph nodes identifies the FOV including the horizontal camera direction and the vertical camera tilt direction relative to the mounted location of the video camera represented by the respective camera graph node;
distributing the camera graph to each of the plurality of video cameras;
each of the plurality of video cameras:
identifying neighboring video cameras based on the camera graph; and
identifying an object of interest within the FOV of the respective video camera, and determining when the object of interest is moving toward the FOV of a neighboring video camera as defined by the camera graph, and in response, sending a unicast peer-to-peer command to the neighboring video camera to track the object of interest when the object of interest arrives in the FOV of the neighboring video camera.

11. The method of any of claims 9-10, comprising:
storing a listing of the plurality of video cameras on the mobile device; and
identifying the respective video camera from the plurality of video cameras by selecting the respective video camera from the listing of the plurality of video cameras via a user interface of the mobile device that includes the display.

12. The method of any of claims 9-11, comprising:
storing a map of the facility on the mobile device; and
identifying the mounted location of the respective video camera in the facility by manually selecting an (x,y) location of the respective video camera on the map of the facility via a user interface of the mobile device.

13. The method of any of claims 9-12, comprising:
establishing communication between the mobile device and a WiFi and/or a Bluetooth beacon system of the facility;
positioning the mobile device adjacent to a respective video camera; and
identifying the mounted location of the respective video camera in the facility includes identifying an (x,y) location of the mobile device using the WiFi and/or the Bluetooth beacon system of the facility.

14. The method of claim 13, comprising: manually entering via a user interface of the mobile device a floor number of the facility that the respective video camera is located, resulting in an (x,y,floor number) tuple location coordinate.

15. A method for mapping camera location and camera field of view (FOV) for each of a plurality of video cameras of a video surveillance system of a facility, the method comprising:
for each of the plurality of video cameras:
identifying the respective video camera from the plurality of video cameras;
identifying a mounted location of the respective video camera in the facility,
identifying a FOV of the respective video camera in the facility, wherein the FOV is defined at least in part by the mounted location, a horizontal camera direction relative to the mounted location, a vertical camera tilt direction relative to the mounted location, and one or more optical specifications of the respective video camera;
identifying one or more of the horizontal camera direction and the vertical camera tilt direction of the respective video camera based at least in part an output of an Inertial Measurement Unit (IMU) of the respective video camera used for image stabilization; and
tracking one or more objects of interest in the facility across two or more of the plurality of video cameras using the identified mounted location and the FOV of the plurality of video cameras.
